# EUROPÄISCHE PATENTSCHRIFT

(11) **EP 3 024 868 B1**
(45) Veröffentlichungstag und Bekanntmachung des Hinweises auf die Patenterteilung: **28.06.2017**
(21) Anmeldenummer: 14739851.5
(22) Anmeldetag: 18.07.2014
(51) Int. Cl.: C08G 18/66, C08G 18/10, C08G 18/12, C08G 18/32

(54) **FORMTEILE AUS VERSTÄRKTEN POLYURETHANHARNSTOFF-ELASTOMEREN UND DEREN VERWENDUNG**
SHAPED PARTS MADE OF REINFORCED POLYURETHANE UREA ELASTOMERS AND USE THEREOF
PIÈCES MOULÉES EN ÉLASTOMÈRES EN URÉE DE POLYURÉTHANE RENFORCÉS ET LEUR UTILISATION

(30) Priorität: 23.07.2013 EP 13177522
(43) Veröffentlichungstag der Anmeldung: 01.06.2016
(73) Patentinhaber: Covestro Deutschland AG, 51373 Leverkusen (DE)
(72) Erfinder: HUPKA, Florian, 40589 Düsseldorf (DE); BÄCKER, Michael, 41352 Korschenbroich (DE); MEYER ZU BERSTENHORST, Birgit, 51375 Leverkusen (DE)
(74) Vertreter: Levpat
(86) Internationale Anmeldenummer: PCT/EP2014/065529
(87) Internationale Veröffentlichungsnummer: WO 2015/011053

(56) Entgegenhaltungen:
- EP-B1- 0 652 250
- WO-A1-2012/126934
- DE-A1-102006 032 187

## Beschreibung

Die Erfindung betrifft mit Verstärkungsstoffen ausgerüstete geschäumte Formteile aus Polyurethanharnstoff-Elastomeren sowie deren Verwendung.

Die Herstellung von Polyurethan(PUR)harnstoff-Elastomeren durch Umsetzung von NCO-Semiprepolymeren mit Gemischen aus aromatischen Diaminen sowie höhermolekularen Hydroxy- oder Aminogruppen enthaltenden Verbindungen ist bekannt und beispielsweise in EP-B 225 640 beschrieben. Um bestimmte mechanische Eigenschaften bei den daraus hergestellten Formkörpern zu erreichen, müssen den Reaktionskomponenten Verstärkungsstoffe zugesetzt werden, wodurch insbesondere thermomechanische Eigenschaften verbessert und der Biege-Elastizitäts-Modul erheblich angehoben wird. Durch den Einsatz dieser Verstärkungsstoffe steigt die Viskosität mindestens einer Reaktionskomponente (in der Regel der Polyolkomponente) deutlich an, was häufig zu Vermischungs- und somit zu Verarbeitungsproblemen führt, die letztendlich Auswirkungen auf das Bauteil haben.

Wünschenswert sind verstärkte Polyurethanharnstoff-Elastomere, die sich bei der Herstellung von flächigen Formkörpern, wie Kotflügel, Türen oder Heckklappen von Automobilen leicht und mit einem möglichst geringen Zusatz an Trennhilfsmitteln von den Formen trennen lassen, um möglichst hohe Taktzeiten durch ein trennfreundliches System zu gewährleisten.

In EP-A 1004 606 werden durch Anheben der Funktionalität der Polyolreaktionskomponente auf 4 bis 8 und der Funktionalität der Polyolkomponente, die bei der Herstellung der Isocyanat-Prepolymerkomponente eingesetzt wird, auf 3 bis 8 gute Trenneigenschaften der verstärkten PUR-Harnstoffelastomeren erhalten.

Ein speziell in der Automobilindustrie immer wichtiger werdender Faktor ist die Gewichtseinsparung. Die Dichte und damit das Gewicht eines Formteils kann bei den Polyurethanharnstoff-Elastomeren durch die Menge des in die Form eingebrachten Reaktionsgemischs in einem gewissen Bereich gesteuert werden. Im Allgemeinen handelt es sich bei den Formkörpern allerdings um mikrozellulare Elastomere, d.h. um keine echten Schaumstoffe mit einer mit dem bloßen Auge sichtbaren Schaumstruktur. Dies bedeutet, dass gegebenenfalls mitverwendete organische Treibmittel weniger die Funktion eines echten Treibmittels als vielmehr die Funktion eines Fließmittels ausüben, wie z.B. in WO 2012/126934 A1 beschrieben. Weiter heißt es in WO 2012/126934 A1, dass eine merkliche Reduzierung der Dichte durch einen erhöhten Gehalt an Treibmittel und eine geringere Eintragsmenge in die Form prinzipiell möglich ist. Dies stellt in der Praxis allerdings keine praktikable Möglichkeit zu einer signifikanten Gewichtsreduzierung dar, da schon bei geringfügig stärkerem Anschäumen der mikrozellularen Elastomere speziell der Biege-Elastizitäts-Modul auf ein nicht mehr akzeptables Niveau fällt.

Die Dichte der resultierenden Formkörper hängt selbstverständlich auch in starkem Maß von der Art und dem Gewichtsanteil der mitverwendeten Füllstoffe ab. In EP-A 639614 wird beschrieben, wie durch den Einsatz von hohlen Mikrokugeln aus Glas oder Keramik eine Reduzierung der Dichte erzielt werden kann. Dabei kommt sowohl die vergleichsweise geringe Dichte der hohlen Mikrokugeln selbst zum Tragen als auch die Eigenschaft der Mikrokugeln, eine höhere Gasbeladung der Polyolformulierung (A-Komponente) zu ermöglichen, woraus ein stärkeres Aufschäumen resultiert. Obwohl zusätzlich zu den hohlen Mikrokugeln noch Mineralfasern als Verstärkungsstoffe eingesetzt werden, zeigt sich der Nachteil dieses Verfahrens darin, dass nur Formteile hergestellt werden können, die relativ niedrige Biege-Elastizitäts-Moduli aufweisen. Es werden zahlreiche Beispiele angeführt, wobei der höchste erzielte Biege-Elastizitäts-Modul 486 MPa beträgt. Für Karosserie-Bauteile in der Automobilindustrie sind allerdings in der Regel Werte von mindestens 600 MPa, in bestimmten Anwendungen sogar von mindestens 1000 MPa zwingend erforderlich.

In EP-B 0267603 wird beschrieben, wie durch den Einsatz von relativ geringen Mengen an Carbonfasern als Verstärkungsstoff Polyurethanharnstoff-Elastomere erhalten werden können, die hinsichtlich ihrer Eigenschaften mit Elastomeren vergleichbar sind, die mit deutlich höheren Mengen an Glasfasern verstärkt sind. Die durchschnittliche Faserlänge der dabei eingesetzten Carbonfasern beträgt 0,3 bis 0,4 mm. In der Praxis hat sich allerdings gezeigt, dass faserförmige Füllstoffe mit Faserlängen von größer 0,2 mm extrem schwierig zu verarbeiten sind. Speziell die im RIM (reaction injection molding)-Verfahren eingesetzten Düsen neigen dabei zur Verstopfung, was extreme Druckschwankungen an den Hochdruck-Mischköpfen und damit eine schwankende Vermischungsqualität von A-Komponente (Polyolkomponente) und B-Komponente (Isocyanatkomponente) zur Folge hat. Aus diesem Grund ist bei kontinuierlicher Produktion keine ausreichende Prozess-Sicherheit gegeben, was aber gerade bei der Fließband-Produktion in der Automobilindustrie unabdingbar ist.

In WO 2012/126934 A1 wird beschrieben, wie Formteile zur Verfügung gestellt werden können, die sowohl gute thermomechanische Eigenschaften als auch eine im Vergleich zu gängigen Polyurethanharnstoff-Elastomeren signifikant geringere Dichte aufweisen und darüber hinaus einen Biege-Elastizitäts-Modul von mindestens 600 MPa besitzen, gute Trenneigenschaften und geringe Standzeiten aufweisen. Dies wird durch den Einsatz einer Kombination aus speziellen hohlen Mikrokugeln und Carbonfasern mit einer maximalen durchschnittlichen Faserlänge von 0,2 mmm, um die Prozesssicherheit zu gewährleisten, erreicht. Nachteilig an diesem Verfahren ist, dass sowohl Carbonfasern, als auch die hohlen Mikrokugeln bevorzugt in die A-Komponente eingearbeitet werden und die Viskosität dieser A-Komponente damit deutlich ansteigt. Dadurch müssen erhöhte Temperaturen der A-Komponente bei der Verarbeitung gefahren werden, was unwirtschaftlich ist. Darüber hinaus steuern erhöhte Feststoffanteile in den beiden Komponenten A und B zu einem gewissen Grad an Prozessunsicherheit bei, da bei der Verarbeitung von Feststoffen die Düsen der RIM-Anlage verstopfen können, was wiederum mit Druckschwankungen an den Hochdruck-Mischköpfen einhergeht und zu unterschiedlichen Verteilungen der hohlen Mikrokugeln und der Carbon-Fasern im Formteil führt. Zudem sind die verwendeten hohlen Mikrokugeln sehr teuer und fungieren im Formteil als eine Art Sollbruchstelle, was sich in den schlechten Werten der Schlagzähigkeit widerspiegelt.

Aufgabe der vorliegenden Erfindung war es daher, Polyurethanharnstoff-Elastomere und damit hergestellte Formteile zur Verfügung zu stellen, die gute thermomechanische Eigenschaften aufweisen, eine im Vergleich zu gängigen Polyurethanharnstoff-Elastomeren signifikant geringere Dichte aufweisen, einen Biege-Elastizitäts-Modul von mindestens 600 MPa besitzen, gute Trenneigenschaften und geringe Standzeiten aufweisen. Um die Prozess-Sicherheit zu gewährleisten, sollen keine faserförmigen Verstärkungsstoffe mit einer durchschnittlichen Faserlänge von größer 0,2 mm eingesetzt werden.

Diese Aufgabe konnte überraschender Weise dadurch gelöst werden, dass ein Polyurethanharnstoff-Elastomer einer bestimmten Zusammensetzung mit Carbonfasern einer bestimmten Länge unter Verwendung bestimmter Ammonium-Carbamate als Treibmittel ausgerüstet wurde.

Gegenstand der vorliegenden Erfindung sind daher mit Verstärkungsstoffen ausgerüstete geschäumte Formteile aus Polyurethanharnstoff-Elastomeren mit einem Harnstoffanteil von 70 bis 95 Mol-% und einem Urethananteil von 5 bis 30 Mol-%, jeweils bezogen auf Mol-% eines NCO-Äquivalents, erhältlich durch Umsetzung eines Reaktionsgemisches bestehend aus einer
A-Komponente bestehend aus
A1) aromatischen Diaminen, die zumindest in jeweils einer ortho-Stellung zu den Aminogruppen einen Alkylsubstituenten aufweisen,
A2) mindestens einer aliphatischen Komponente bestehend aus mindestens einem Hydroxyl- und/oder primäre Aminogruppen aufweisenden Polyether- und/oder Polyesterpolyol mit einem zahlenmittleren Molekulargewicht von 500 bis 18 000 und einer Funktionalität von 3 bis 8 und
A3) gegebenenfalls Katalysatoren und/oder gegebenenfalls Zusatzstoffen
sowie einem isocyanatgruppenhaltigen Prepolymer als B-Komponente erhältlich durch Umsetzung eines Reaktionsgemisches bestehend aus
B1) einer Polyisocyanatkomponente aus der Gruppe bestehend aus Polyisocyanaten und Polyisocyanatgemischen der Diphenylmethanreihe und verflüssigten Polyisocyanaten der Diphenylmethanreihe und
B2) mindestens einer Polyolkomponente mit einem zahlenmittleren Molekulargewicht von 500 bis 18 000 und einer Funktionalität von 2,7 bis 8 aus der Gruppe bestehend aus Polyetherpolyolen, die gegebenenfalls organische Füllstoffe enthalten, und Polyesterpolyolen, die gegebenenfalls organische Füllstoffe enthalten,
dadurch gekennzeichnet, dass die Komponente A Ammonium-Carbamatsalze (A4) und dass die Komponente A oder die Komponente B oder beide Komponenten Carbonfasern (C) mit einer durchschnittlichen Faserlänge von 60 bis 200 µm enthalten.

Die als Treibmittel eingesetzten, mindestens 2 OH-Gruppen enthaltenden Ammonium-Carbamatsalze entsprechen der Formel I):

HO-X-N(R¹)H₂^{+ -}O-C(O)-N(R¹)-X-OH (I)

| | | | | |
|---|---|---|---|---|
| R¹ | = | H, C₁-C₅-Alkylrest oder -X-OH | | |
| X | = | [CR²R³]ₙ | n = 2-6 | |
| | = | (CR²R³)ₚ-[-O-(-CR²R³-)-ₚ]_{q} | p = 2-4 | q = 1-10 |
| | = | (CR²R³)-[-N(R⁴)-(-CR²R³-)-ᵣ]ₛ | r = 2-4 | s = 1-10 |
| R², R³ | = H, C₁-C₅-Alkylrest | | | |
| R4 | = H, C₁-C₅-Alkylrest oder -X-OH | | | |

Die Herstellung der Ammonium-Carbamatsalze ist in EP 0652250 B1 beschrieben.

Durch die Verwendung der Ammonium-Carbamatsalze (A4) als Treibmittel wird die Dichte der Polyurethanharnstoff-Elastomere ohne ein zu starkes Aufschäumen signifikant reduziert. Durch die Carbonfasern (C) werden die erforderlichen thermomechanischen Eigenschaften und insbesondere der notwendige Biege-Elastizitäts-Modul erreicht. Würde anstelle der Carbonfaser eine Glasfaser oder Mineralfaser auf Silikat-Basis verwendet wie in EP 639614 A1, hätte dies augrund der deutlich höheren benötigten Masse an Faser eine signifikant höhere Dichte des Formteils zur Folge. Die Verwendung von hohlen Mikrokugeln, wie in WO 2012/126934 beschrieben, hat zur Folge, dass sowohl die Schlagzähigkeit des Formteils schlecht ist, insbesondere bei niedrigen Temperaturen, als auch die Bruchdehnung und die Verarbeitung aufgrund des hohen Füllstoffanteils (Carbonfaser und Mikrohohlkugeln) erschwert ist und ein deutlich höherer Preis aufgrund der Mikrohohlkugeln bezahlt werden müsste. Die Preisersparnis durch eine Reduzierung der Masse an Polyurethanmatrix wird also durch den hohen Preis der Glashohlkugeln zu Nichte gemacht, bzw. erhöht sogar den Preis des Formteils.

Die A-Komponente und die B-Komponente werden in einem solchen Mengenverhältnis umgesetzt, dass die Isocyanatkennzahl des erhaltenen Elastomeren bevorzugt im Bereich von 80 bis 120 liegt und dass die über die B-Komponente eingebrachte Polyolkomponente B2) bevorzugt 10 bis 90 Mol-% des Urethananteils im Elastomer erzeugt.

Bevorzugt werden verstärkte Polyurethan-Elastomere mit einem Harnstoffanteil von 75 bis 90 Mol-% und einem Urethananteil von 10 bis 25 Mol-%, bezogen auf Mol-% eines NCO-Äquivalents eingesetzt.

Es ist besonders bevorzugt, dass die A-Komponente und die B-Komponente in einem solchen Mengenverhältnis umgesetzt werden, dass die Isocyanatkennzahl des erhaltenen Elastomeren bevorzugt im Bereich von 90 bis 115 liegt und die über die B-Komponente eingebrachte Polyolkomponente B2) vorzugsweise 30 bis 85 Mol-% des Urethananteils im Elastomer erzeugt.

Als Carbonfasern (C) (C-Fasern, Kohlefasern) können beispielsweise die gemahlenen Kohlefaser-Typen Sigrafil® C10 M250 UNS und Sigrafil® C30 M150 UNS von der Fa. SGL Carbon oder Tenax®-A HT M100 100mu und Tenax®-A HT M100 60mu von der Fa. Toho Tenax Europe GmbH oder CFMP-150 90µm von der Firma NIPPON POLYMER SANGYO CO., LTD., erhältlich bei der Fa. Dreychem, eingesetzt werden. Bevorzugt sind Kohlefasern mit einer durchschnittlichen Länge der Fasern von 60 bis 200 µm, besonders bevorzugt 90 bis 200 µm, besonders bevorzugt von 90 bis 170 µm.

Die Carbonfasern werden üblicherweise in Mengen von 1 bis 20 Gew.-%, bevorzugt von 1 bis 15 Gew.-%, besonders bevorzugt von 1 bis 10 Gew.-% und insbesondere bevorzugt von 3 bis 7 Gew.-%, bezogen auf die Gesamtmenge der Komponenten A, B, C und D, bei dem erfindungsgemäßen Verfahren zugesetzt.

Wie oben beschrieben wird eine sogenannte A-Komponente mit einer sogenannten B-Komponente umgesetzt, wobei bevorzugt die A-Komponente die Ammonium-Carbamatsalze (A4) und die Kohlefasern (C) enthält.

Als Komponente (A4) werden erfindungsgemäß Ammonium-Carbamatsalze eingesetzt, die den eigentlichen Treibeffekt hervorrufen und eine gute Verarbeitung der beiden Komponenten A) und B) durch eine verbesserte Fließeigenschaft der flüssigen Komponente A) begünstigen.

Bei den erfindungsgemäß eingesetzten Ammonium-Carbamatsalzen handelt es sich um Verbindungen der bereits oben genannten allgemeinen Formeln. Die Herstellung der Ammonium-Carbamatsalze erfolgt durch einfache Sättigung der zugrundeliegenden Alkanolamine mit gasförmigem oder festem Kohlendioxid bei Temperaturen zwischen 40 und 130°C. Besonders bevorzugte Alkanolamine zur Herstellung der Ammonium-Carbamate sind Ethanolamin, Isopropanolamin, 3-Aminopropanol-1, N-Methylethanolamin, 2-(2-Aminoethoxy)-ethanol, N-(2-Aminoethyl)-ethanolamin oder Gemische derartiger Alkanolamine.

Die Zugabe der Ammonium-Carbamate erfolgt ausschließlich auf der Seite der A-Komponente. Die Ammonium-Carbamate werden in einer solchen Menge zugegeben und die Menge des in die Form eingebrachten Reaktionsgemisches wird so bemessen, dass die Formkörper eine Dichte von 0,7 bis 1,1 g/cm³, bevorzugt 0,8 bis 1,1 g/cm³, besonders bevorzugt 0,9 bis 1,1 g/cm³ und insbesondere bevorzugt 0,9 bis 1,0 g/cm³ aufweisen.

Als Komponente A1) kommen aromatische Diamine in Betracht, die zumindest in jeweils einer ortho-Stellung zu den Aminogruppen einen Alkylsubstituenten aufweisen und die ein Molekulargewicht von 122 bis 400 besitzen. Besonders bevorzugt sind solche aromatischen Diamine, die in ortho-Stellung zu der ersten Aminogruppe mindestens einen Alkylsubstituenten und in ortho-Stellung zu der zweiten Aminogruppe zwei Alkylsubstituenten mit jeweils 1 bis 4, vorzugsweise 1 bis 3 Kohlenstoffatomen aufweisen. Ganz besonders bevorzugt sind solche, die in jeweils mindestens einer ortho-Stellung zu den Aminogruppen einen Ethyl-, n-Propyl- und/oder iso-Propylsubstituenten und gegebenenfalls in weiteren ortho-Stellungen zu den Aminogruppen Methylsubstituenten aufweisen. Beispiele für derartige Diamine sind 2,4-Diaminomesitylen, 1,3,5-Triethyl-2,4-diaminobenzol sowie dessen technische Gemische mit 1-Methyl-3,5-diethyl-2,6-diaminobenzol oder 3,5,3',5'-Tetraisopropyl-4,4'-diaminodiphenylmethan. Selbstverständlich können die Gemische untereinander ebenfalls eingesetzt werden. Besonders bevorzugt handelt es sich bei der Komponente A1) um 1-Methyl-3,5-diethyl-2,4-diaminobenzol oder um dessen technische Gemische mit 1-Methyl-3,5-diethyl-2,6-diaminobenzol (DETDA).

Die Komponente A2) besteht aus mindestens einem aliphatischen Hydroxyl- und/oder primäre Aminogruppen aufweisenden Polyether- und/oder Polyesterpolyol der Molmasse 500 bis 18 000, bevorzugt 1000 bis 16 000, vorzugsweise 1500 bis 15 000. Die Komponente A2) besitzt die zuvor erwähnten Funktionalitäten. Die Polyetherpolyole können in an sich bekannter Art durch Alkoxylierung von Startermolekülen oder deren Gemischen entsprechender Funktionalität hergestellt werden, wobei zur Alkoxylierung insbesondere Propylenoxid und Ethylenoxid verwendet werden. Geeignete Starter bzw. Startergemische sind Succrose, Sorbit, Pentaerythrit, Glycerin, Trimethylolpropan, Propylenglykol sowie Wasser. Bevorzugt sind solche Polyetherpolyole, deren Hydroxygruppen zumindest zu 50 %, vorzugsweise mindestens zu 70 %, insbesondere ausschließlich aus primären Hydroxygruppen bestehen.

Als Polyesterpolyole kommen insbesondere solche in Betracht, die sich aufbauen aus den dafür bekannten Dicarbonsäuren, wie Adipinsäure, Phthalsäure, sowie den mehrwertigen Alkoholen, wie Ethylenglykol, 1,4-Butandiol und gegebenenfalls anteilig Glycerin und Trimethylolpropan.

Solche Polyether- und Polyesterpolyole sind beispielsweise beschrieben in Kunststoffhandbuch 7, Becker/Braun, Carl Hanser Verlag, 3. Auflage, 1993.

Weiterhin können als Komponente A2) primäre Aminogruppen aufweisende Polyether- und/oder Polyesterpolyole eingesetzt werden, wie sie beispielsweise in EP 219035 A2 beschrieben werden und als ATPE (Amino-terminierte Polyether) bekannt sind.

Insbesondere eignen sich als Aminogruppen aufweisende Polyether- und/oder Polyesterpolyole die sogenannten Jeffamine® der Firma Huntsman, die aus α,ω-Diaminopolypropylenglykolen aufgebaut sind.

Als Komponente A3) können die für die Urethan- und Harnstoffreaktion bekannten Katalysatoren eingesetzt werden, wie z.B. tertiäre Amine oder Zinn(II)- oder Zinn(IV)-Salze höherer Carbonsäuren. Als weitere Zusatzstoffe kommen Stabilisatoren, wie die bekannten Polyethersiloxane, oder Trennmittel, wie Zinkstearat, zum Einsatz. Die bekannten Katalysatoren oder Zusatzstoffe sind beispielsweise in Kapitel 3.4 des Kunststoffhandbuchs J. Polyurethane, Carl Hanser Verlag (1993), S. 95 bis 119 beschrieben und können in den üblichen Mengen eingesetzt werden.

Die sogenannte B-Komponente stellt ein NCO-Prepolymer auf Basis der Polyisocyanatkomponente B1) und der Polyolkomponente B2) dar und weist vorzugsweise einen NCO-Gehalt von 8 bis 32 Gew.-%, vorzugsweise 12 bis 26 Gew.-%, besonders bevorzugt von 12 bis 25 Gew.-%, besonders bevorzugt von 14 bis 25 Gew.-%, insbesondere bevorzugt von 14 bis 20 Gew.-% auf.

Bei den Polyisocyanaten B1) handelt es sich um gegebenenfalls durch chemische Modifizierung verflüssigte Polyisocyanate oder Polyisocyanatgemische der Diphenylmethanreihe. Der Begriff "Polyisocyanat der Diphenylmethanreihe" stellt den Oberbegriff für alle Polyisocyanate dar, wie sie bei der Phosgenierung von Anilin/Formaldehyd-Kondensaten gebildet werden und in den Phosgenierungsprodukten als Einzelkomponenten vorliegen. Der Begriff "Polyisocyanatgemisch der Diphenylmethanreihe" steht für beliebige Gemische von Polyisocyanaten der Diphenylmethanreihe, d.h. beispielsweise für die genannten Phosgenierungsprodukte, die bei der destillativen Auftrennung derartiger Gemische als Destillat oder Destillationsrückstand anfallen und für beliebige Abmischungen von Polyisocyanaten der Diphenylmethanreihe.

Typische Beispiele für geeignete Polyisocyanate B1) sind 4,4'-Diisocyanatodiphenylmethan, dessen Gemische mit 2,2'- und insbesondere 2,4'-Diisocyanatodiphenylmethan, Gemische dieser Diisocyanatodiphenylmethan-Isomeren mit ihren höheren Homologen, wie sie bei der Phosgenierung von Anilin/Formaldehyd-Kondensaten anfallen, durch partielle Carbodiimidisierung der Isocyanatgruppen der genannten Di- und/oder Polyisocyanate modifizierte Di- und/oder Polyisocyanate oder beliebige Gemische derartiger Polyisocyanate.

Als Komponente B2) sind insbesondere die dieser Definition entsprechenden Polyether- oder Polyesterpolyole bzw. Gemische derartiger Polyhydroxylverbindungen geeignet. In Betracht kommen beispielsweise entsprechende Polyetherpolyole, die gegebenenfalls organische Füllstoffe in dispergierter Form enthalten. Bei diesen dispergierten Füllstoffen handelt es sich beispielsweise um Vinylpolymerisate, wie sie z.B. durch Polymerisation von Acrylnitril und Styrol in den Polyetherpolyolen als Reaktionsmedium entstehen (US-A 33 83 351, 33 04 273, 35 23 093, 31 10 695, DE-B 11 52 536) oder um Polyharnstoffe oder Polyhydrazide, wie sie durch eine Polyadditionsreaktion in den Polyetherpolyolen als Reaktionsmedium aus organischen Diisocyanaten und Diaminen bzw. Hydrazin entstehen (DE-B 12 60 142, DE-A 24 23 984, 25 19 004, 25 13 815, 25 50 833, 25 50 862, 26 33 293 oder 25 50 796). Grundsätzlich sind als Komponente B2) Polyetherpolyole oder Polyesterpolyole der bereits oben unter A2) genannten Art geeignet, sofern sie den zuletzt genannten Kenndaten entsprechen.

Die Polyolkomponente B2) weist eine mittlere Molmasse von bevorzugt 1000 bis 16 000, insbesondere 2000 bis 16 000, und eine mittlere Hydroxyfunktionalität von 2,7 bis 8, bevorzugt 2,7 bis 7 auf.

Zur Herstellung der NCO-Semiprepolymeren B) werden vorzugsweise die Komponenten B1) und B2) in solchen Mengenverhältnissen zur Reaktion gebracht (NCO-Überschuss), dass NCO-Semiprepolymere mit dem oben genannten NCO-Gehalt resultieren. Die diesbezügliche Umsetzung erfolgt im Allgemeinen innerhalb des Temperaturbereichs von 25 bis 100°C.

Die Herstellung der erfindungsgemäßen Formteile aus Polyurethanharnstoff-Elastomeren erfolgt nach der bekannten Reaktionsspritzgusstechnik (RSG-Verfahren, "RIM-process"), wie sie beispielsweise in DE-A 2 622 951 (US-A 4 218 543) oder DE-A 39 14 718 beschrieben ist. Die Mengenverhältnisse der Komponenten A und B entsprechen hierbei den stöchiometrischen Verhältnissen mit einer NCO-Kennzahl von 80 bis 120. Im Allgemeinen handelt es sich bei den erfindungsgemäßen Formkörpern um mikrozellulare Elastomere, d.h. um keine echten Schaumstoffe mit einer dem bloßen Auge sichtbaren Schaumstruktur.

Die Menge des in die Form eingebrachten Reaktionsgemisches wird so bemessen, dass die Formkörper eine Dichte von 0,7 bis 1,1 g/cm³, bevorzugt 0,8 bis 1,1 g/cm³, besonders bevorzugt 0,9 bis 1,1 g/cm³ und insbesondere bevorzugt 0,9 bis 1,0 g/cm³ aufweisen.

Die Zusammensetzung des Polyurethanharnstoff-Elastomers (Komponenten A und B) und die Gehalte an Ammonium-Carbamatsalzen A4) werden so gewählt, dass das verstärkte Elastomer einen Biege-Elastizitäts-Modul längs zur Faserrichtung von mindestens 600 MPa, bevorzugt von mindestens 700 MPa, besonders bevorzugt von mindestens 800 MPa aufweist.

Die Ausgangstemperatur des in die Form eingebrachten Reaktionsgemischs aus den Komponenten A) und B) liegt im Allgemeinen bei 20°C bis 80°C, vorzugsweise bei 30°C bis 60°C. Die Temperatur der Form liegt im Allgemeinen bei 30°C bis 130°C, vorzugsweise bei 50°C bis 70°C. Bei den zum Einsatz gelangenden Formwerkzeugen handelt es sich um solche der an sich bekannten Art, vorzugsweise aus Aluminium oder Stahl oder um metallgespritzte Epoxidwerkzeuge. Zur Verbesserung der Entformungseigenschaften können die Innenwände der verwendeten Form gegebenenfalls mit bekannten äußeren Formtrennmitteln beschichtet werden.

Die in der Form entstehenden Formkörper können im Allgemeinen nach einer Formstandzeit von 5 bis 180 Sekunden entformt werden. Gegebenenfalls schließt sich an die Entformung ein Tempern bei einer Temperatur von ca. 60°C bis 180°C während eines Zeitraums von 30 bis 120 Minuten an.

Die so hergestellten, vorzugsweise flächigen PU-Formkörper eignen sich insbesondere zur Herstellung von flexiblen Automobilstoßstangen und von flexiblen Karosserieelementen, wie Türen und Heckklappen, Kotflügeln, Heck- und Frontschürzen von Automobilen.

Die Erfindung soll anhand der nachfolgenden Beispiele näher erläutert werden.

### Beispiele:

### Ausgangsmaterialien:

### Semiprepolymer 1:

52,8 Gew.-Teile eines Gemisches aus 80 Gew.-% 4,4'-Diisocyanatodiphenylmethan, 10 Gew.-% 2,4'-Diisocyanatodiphenylmethan und 10 Gew.-% 3-Kern-MDI wurden bei 90°C mit 47,2 Gew.-Teilen des Polyetherpolyols 1 umgesetzt.
NCO-Gehalt nach 2 Stunden: 15,4 Gew.-%

### Polyetherpolyol 1 :

Polyetherpolyol mit einer OH-Zahl von 48 und einer Funktionalität von 2,8, hergestellt durch Umsetzung eines Gemisches aus Glycerin als trifunktionellem Starter und 1,2-Propylenglycol als difunktionellem Starter mit Propylenoxid/Ethylenoxid im Gewichtsverhältnis von 90:10.

### Polyetherpolyol 2:

Polyetherpolyol mit einer OH-Zahl von 28, hergestellt durch Propoxylierung von Sorbit als hexafunktionellem Starter und anschließende Ethoxylierung im Gewichtsverhältnis von 83:17 mit überwiegend primären OH-Gruppen.

### Ammonium-Carbamatsalz (Treibmittel):

Zusatzmittel VP.PU 19IF00 A der Firma Bayer MaterialScience AG (Reaktionsprodukt aus Isopropylamin und Kohlenstoffdioxid) mit einer OH-Zahl von 1483.

### DETDA:

Mischung aus 80 Gew.-% 1-Methyl-3,5-diethyl-2,4-diaminobenzol und 20 Gew.-% 1-Methyl-3,5-diethyl-2,6-diaminobenzol.

### Jeffamin D 400:

aliphatisches Diamin der Fa. Huntsman

### DABCO 33 LV:

1,4-Diazabicyclo[2.2.2]octan (33 Gew.-% in Dipropylenglycol) der Fa. Air Products

### Tegostab B 8936:

Polyethermodifiziertes Polysiloxan der Fa. Evonik Industries

### PRS-H:

Trifunktionelles Polyesterpolyol, Kondensationsprodukt aus Polyrizinolsäure und 1,6-Hexandiol mit einem Molekulargewicht von 4800 g/mol

### Carbonfaser:

Sigrafil^{®} C30 M150 UNS von der Fa. SGL Carbon (Schnittlänge 150µm)

### Mikro-Glashohlkugeln:

3M™ Glass Bubbles™ iM30K der Fa. Minnesota Mining Manufacturing (3M)

Die Verarbeitung der im Folgenden beschriebenen Rezepturen erfolgte durch Reaktionsspritzgusstechnik. Die A- und die B-Komponente wurden mittels eines Hochdruckdosiergerätes nach intensiver Vermischung in einem zwangsgesteuerten Mischkopf in ein geheiztes Plattenwerkzeug mit einer Formtemperatur von 60 °C und den Abmessungen 300 x 200 x 3 mm über einen Staubalkenanguss gedrückt.

Die Temperatur der A-Komponente betrug 45°C, und die Temperatur der B-Komponente betrug 45°C.

Die mechanischen Werte wurden vor dem Tempern und nach 30 minütigem Tempern bei 120°C in einem Umlufttrockenschrank und anschließender Lagerung von 24 Stunden gemessen.

Das Werkzeug wurde mit dem Formtrennmittel EWOmold 5408 der Fa. KVS Eckert & Woelk GmbH behandelt.

### Polyolformulierung 1:

46,7 Gew.-% Polyetherpolyol 2
41,7 Gew.-% DETDA
5,5 Gew.-% Zn-Stearat
0,7 Gew.-% Jeffamin D 400
4,2 Gew.-% PRS-H
0,9 Gew.-% Tegostab B 8936
0,2 Gew.-% DABCO 33 LV
0,1 Gew.-% Dimethylzinn-bis-2,2-dimethyloctanoat
OH-Zahl der Polyolformulierung 1: 292

### Beispiel 1:

Es wurden 2,9 Gew.-Teile VP.PU 19IF00 A und 14,6 Gew.-Teile Sigrafil® C30 M150 UNS 150mu in 97,1 Gew.-Teile der Polyolformulierung 1 eingerührt und diese Mischung mit 144,5 Gew.-Teilen des Prepolymers 1 unter den für die RIM-Technik üblichen Verarbeitungsbedingungen in eine auf 60°C geheizte Form der Größe 300 x 200 x 3 mm gespritzt (Index 105). Das Formteil wurde nach 30 Sekunden entformt.

### Vergleichsbeispiel 2:

Es wurden 28,8 Gew.-Teile 3M™ Glass Bubbles™ iM30K und anschließend 11,5 Gew.-Teile Sigrafil® C30 M150 UNS 150mu in 100 Gew.-Teile der Polyolformulierung 1 eingerührt und diese Mischung mit 105 Gew.-Teilen des Prepolymers 1 unter den für die RIM-Technik üblichen Verarbeitungsbedingungen in eine auf 60°C geheizte Form der Größe 300 x 200 x 3 mm gespritzt (Index 105). Das Formteil wurde nach 30 Sekunden entformt.

Die mechanischen Eigenschaften wurden wie folgt bestimmt:
Rohdichte gemäß DIN 53 420
Biege-Elastizitäts-Modul (Biege-E-Modul) gemäß ASTM 790
Dynstat bei -25°C gemäß DIN 53 435-DS (Tieftemperatur-Zähigkeit)
Zugfestigkeit gemäß DIN 53 504
Bruchdehnung gemäß DIN EN ISO 1798
Heat Deflection Temperature (HDT) gemäß DIN EN ISO 75
Viskosität gemäß DIN EN ISO 53019 (d/dt = 60 1/s): d/dt = Scherrate (Viskosimeter: MCR 501 der Fa. Anton Paar)

Der Biege-E-Modul wurde jeweils längs und quer zur Fließrichtung/Faserrichtung bestimmt.

**Tabelle 1: Mechanische Eigenschaften vor und nach Temperung**

| | **Beispiel 1 (ungetempert)** | **Vergleichsbeispiel 2 (ungetempert)** | **Beispiel 1 (getempert)** | **Vergleichsbeispiel 2 (getempert)** |
|---|---|---|---|---|
| **Füllstoff [Gew.-%]** | 5,2 Gew.-% C-Fasern | 10 Gew.-% Glashohlkugeln und 4 Gew.-% C-Fasern | 5,2 Gew.-% C-Fasern | 10 Gew.-% Glashohlkugeln und 4 Gew.-% C-Fasern |
| **Treibmittel** | Ammonium-Carbamatsalz | --- | Ammonium-Carbamatsalz | --- |
| **Rohdichte [kg/m³]** | 950 | 990 | 950 | 990 |
| **Biege-E-Modul längs/quer [MPa]** | 850/620 | 880/690 | 850/615 | 870/660 |
| **Dynstat -25°C [kJ/m²]** | 15,4 | 9 | 19,2 | 13 |
| **Zugfestigkeit [MPa]** | 23,4 | 10 | 23,3 | 10 |
| **Bruchdehnung [%]** | 128 | 90 | 120 | 70 |
| **HDT [°C]** | 109 | 96 | 147 | 135 |
| **Viskosität Iso/Polyol [mPas]** | 230 (bei 45°C)/ 390 (bei 45°C) | 380 (bei 50°C)/ 780 (bei 60°C) | 230 (bei 45°C)/ 390 (bei 45°C) | 380 (bei 50°C)/ 780 (bei 60°C) |
| **Edukttemperatur Iso/Polyol [°C]** | 45/45 | 50/60 | 45/45 | 50/60 |

Das erfindungsgemäße Beispiel 1 zeigt, dass durch die Verwendung des Ammonium-Carbamat-Salzes VP.PU 19IF00 A als Treibmittel in Kombination mit 5,2 Gew.-% Carbonfaser, bezogen auf das Elastomer, ein Biege-E-Modul von 850 MPa längs zur Faserrichtung und 620 MPa quer zur Faserrichtung bei einer Rohdichte des Formteils von 950 kg/m³ erzielt wurde. Wurden zur Dichtereduzierung wie im Vergleichsbeispiel 2 Glashohlkugeln in Verbindung mit 4 Gew.-% Carbonfasern eingesetzt, wurden nur leicht höhere Biege-E-Moduli erzielt, allerdings einhergehend mit einer um ca. 10% höheren Dichte (990 kg/m³) der Formteile. Die mechanischen Werte der ungetemperten Probe lagen im erfindungsgemäßen Beispiel 1 stets deutlich über denen des Vergleichsbeispiels 2. Die Schlagzähigkeit bei -25 °C (Dynstat) lag im erfindungsgemäßen Beispiel 1 fast doppelt so hoch wie im Vergleichsbeispiel 2. Die Zugfestigkeit war mit 23,4 MPa ebenfalls deutlich höher als im Vergleichsbeispiel 2 (10 MPa). Einen ganz deutlichen Vorteil bot das erfindungsgemäße Beispiel 1 gegenüber dem Vergleichsbeispiel 2 in der Bruchdehnung, einem sehr wichtigen mechanischen Kennwert bei Polyurethan-Harnstoffelastomeren. Die Bruchdehnung war mit 128% um ca. 30% höher als im Vergleichsbeispiel 2. Auch die Wärmeformbeständigkeit des ungetemperten Formteils lag mit 109 °C deutlich über dem HDT-Wert des Vergleichsbeispiels 2 mit 96 °C.

Auch im Falle der getemperten Prüfkörper wurden sehr hohe Biege-E-Moduli von 850 MPa längs zur Faserrichtung und 615 MPa quer zur Faserrichtung erzielt. Bei einer deutlich niedrigeren Formteildichte lagen diese Werte nur leicht unter denen des Vergleichsbeispiels 2. Die Schlagzähigkeit bei -25 °C (Dynstat) lag im erfindungsgemäßen Beispiel 1 mit 19,2 kJ/m² deutlich über dem des Vergleichsbeispiels 2 mit 13 kJ/m². Die Zugfestigkeit war mit 23,3 MPa ebenfalls deutlich höher als im Vergleichsbeispiel 2 (10 MPa). Der deutliche Vorteil in der Bruchdehnung des erfindungsgemäßen Beispiels 1 bestand also auch bei den getemperten Proben. Mit einer Bruchdehnung von 120% lag der Wert um über 40% höher als im Vergleichsbeispiel 2 (Bruchdehnung 70%). Auch die Wärmeformbeständigkeit des getemperten Formteils lag mit 147°C deutlich über dem HDT-Wert des Vergleichsbeispiels 2 mit 135°C.

Ein wichtiger Faktor, insbesondere bei der Verarbeitung von Polyurethan-Harnstoffelastomeren mittels RIM-Technik, ist die Viskosität der Edukte bei gegebener Temperatur. Eine niedrige Viskosität fördert eine gute Vermischung der Komponenten im Mischkopf. Hohe Viskositäten können somit zu deutlichen Vermischungsstörungen führen, die sich negativ auf das fertige Bauteil auswirken. Aus wirtschaftlichen Gründen ist zudem eine niedrige Temperatur der Edukte wünschenswert. Im erfindungsgemäßen Beispiel 1 lag die Viskosität mit 230 mPas auf der Polyolseite deutlich unter der des Vergleichsbeispiels 2 (780 mPas auf der Polyolseite) und das sogar bei deutlich niedrigeren Edukttemperaturen. Die Edukttemperaturen lagen mit jeweils 45 °C auf beiden Eduktseiten im erfindungsgemäßen Beispiel 1 um 5 °C (Isocyanatseite) bzw. sogar 15 °C (Polyolseite) niedriger im Vergleich zum Vergleichsbeispiel 2.

Durch das erfindungsgemäße Verfahren konnte ein Polyurethanharnstoff-Elastomer bereitgestellt werden, das gegenüber einem nach dem Stand der Technik hergestellten Elastomer bei vergleichbarem Biege-E-Modul eine um ca. 10% niedrigere Dichte sowie deutlich bessere mechanische und thermomechanische Eigenschaften, wie zum Beispiel Tieftemperatur-Zähigkeit, Zugfestigkeit, Wärmeformbeständigkeit und Bruchdehnung aufweist. Karosserieaußenteile aus dem erfindungsgemäßen Elastomer eignen sich daher hervorragend zur Gewichtseinsparung im Automobilbau.

## Patentansprüche

1. Mit Verstärkungsstoffen ausgerüstete geschäumte Formteile aus Polyurethanharnstoff-Elastomeren mit einem Harnstoffanteil von 70 bis 95 Mol-% und einem Urethananteil von 5 bis 30 Mol-%, jeweils bezogen auf Mol-% eines NCO-Äquivalents, erhältlich durch Umsetzung eines Reaktionsgemisches bestehend aus einer
A-Komponente bestehend aus
A1) aromatischen Diaminen, die zumindest in jeweils einer ortho-Stellung zu den Aminogruppen einen Alkylsubstituenten aufweisen,
A2) mindestens einer aliphatischen Komponente bestehend aus mindestens einem Hydroxyl- und/oder primäre Aminogruppen aufweisenden Polyether- und/oder Polyesterpolyol mit einem zahlenmittleren Molekulargewicht von 500 bis 18 000 und einer Funktionalität von 3 bis 8 und
A3) gegebenenfalls Katalysatoren und/oder gegebenenfalls Zusatzstoffen
sowie einem isocyanatgruppenhaltigen Prepolymer als B-Komponente erhältlich durch Umsetzung eines Reaktionsgemisches bestehend aus
B1) einer Polyisocyanatkomponente aus der Gruppe bestehend aus Polyisocyanaten und Polyisocyanatgemischen der Diphenylmethanreihe und verflüssigten Polyisocyanaten der Diphenylmethanreihe und
B2) mindestens einer Polyolkomponente mit einem zahlenmittleren Molekulargewicht von 500 bis 18 000 und einer Funktionalität von 2,7 bis 8 aus der Gruppe bestehend aus Polyetherpolyolen, die gegebenenfalls organische Füllstoffe enthalten, und Polyesterpolyolen, die gegebenenfalls organische Füllstoffe enthalten,
**dadurch gekennzeichnet, dass** die Komponente A Ammonium-Carbamatsalze (A4) und dass die Komponente A oder die Komponente B oder beide Komponenten Carbonfasern (C) mit einer durchschnittlichen Faserlänge von 60 bis 200 µm enthalten.

2. Formteile nach Anspruch 1, **dadurch gekennzeichnet, dass** die Carbonfasern (C) durchschnittliche Faserlängen von 90 bis 200 µm besitzen.

3. Formteile nach einem der Ansprüche 1 bis 2, **dadurch gekennzeichnet, dass** die Formteile eine Dichte von 0,7 bis 1,1 g/cm³ aufweisen.

4. Formteile nach einem der Ansprüche 1 bis 3, **dadurch gekennzeichnet, dass** die Formteile einen Biege-Elastizitäts-Modul längs zur Faserrichtung von mindestens 600 MPa besitzen.

5. Verwendung der Formteile nach einem der Ansprüche 1 bis 4 als Karosserieaußenteile, Karosserieelemente, flexible Automobilstoßstangen, Kotflügel, Türen, Heckklappen, Front- und Heckschürzen.

## Claims

1. Foamed moldings made of polyurethane urea elastomers and provided with reinforcing materials and having from 70 to 95 mol% urea content and from 5 to 30 mol% urethane content, based in each case on mol% of an NCO equivalent, obtainable via reaction of a reaction mixture composed of an
A-component composed of
A1) aromatic diamines which at least in a respective ortho-position with respect to the amino groups have an alkyl substituent,
A2) at least one aliphatic component composed of at least one polyether polyol and/or polyester polyol in each case having hydroxy and/or primary amino groups with number-average molecular weight from 500 to 18 000 and functionality from 3 to 8, and
A3) optionally catalysts and/or optionally additives,
and of, as B-component, a prepolymer containing isocyanate groups and obtainable via reaction of a reaction mixture composed of
B1) a polyisocyanate component from the group consisting of polyisocyanates and polyisocyanate mixtures of the diphenylmethane group and of liquefied polyisocyanates of the diphenylmethane group, and
B2) at least one polyol component with number-average molecular weight from 500 to 18 000 and functionality from 2.7 to 8 from the group consisting of polyether polyols which optionally comprise organic fillers and polyester polyols which optionally comprise organic fillers,
**characterized in that**
ammonium carbamate salts (A4) are comprised in component A and carbon fibers (C) with average fiber length from 60 to 200 µm are comprised in component A or component B or both components.

2. Moldings according to Claim 1, **characterized in that** the average fibers lengths of the carbon fibers (C) are from 90 to 200 µm.

3. Moldings according to either of Claims 1 and 2, **characterized in that** the density of the moldings is from 0.7 to 1.1 g/cm³.

4. Moldings according to any of Claims 1 to 3, **characterized in that** the flexural modulus of elasticity of the moldings longitudinally with respect to the fiber direction is at least 600 MPa.

5. Use of the moldings according to any of Claims 1 to 4 as external bodywork parts, as bodywork elements, as flexible automobile bumpers, as wheel surrounds, as doors, as tailgates, as front aprons, and as rear aprons.

## Revendications

1. Pièces moulées moussées en élastomères de polyuréthane-urée munies de matières renforçantes, ayant une proportion d'urée de 70 à 95 % en moles et une proportion d'uréthane de 5 à 30 % en moles, à chaque fois par rapport aux % en moles d'un équivalent de NCO, pouvant être obtenues par mise en réaction d'un mélange réactionnel constitué par :
un composant A constitué par
A1) des diamines aromatiques, qui comprennent un substituant alkyle au moins à chaque fois en une position ortho par rapport aux groupes amino,
A2) au moins un composant aliphatique constitué par au moins un polyéther- et/ou polyester-polyol comprenant des groupes hydroxyle et/ou amino primaires, ayant un poids moléculaire moyen en nombre de 500 à 18 000 et une fonctionnalité de 3 à 8, et
A3) éventuellement des catalyseurs et/ou éventuellement des additifs,
ainsi qu'un prépolymère contenant des groupes isocyanate en tant que composant B, pouvant être obtenu par mise en réaction d'un mélange réactionnel constitué par
B1) un composant polyisocyanate du groupe constitué par les polyisocyanates et les mélanges de polyisocyanates de la série du diphénylméthane et les polyisocyanates liquéfiés de la série du diphénylméthane, et
B2) au moins un composant polyol ayant un poids moléculaire moyen en nombre de 500 à 18 000 et une fonctionnalité de 2,7 à 8 du groupe constitué par les polyéther-polyols, qui contiennent éventuellement des charges organiques, et les polyester-polyols, qui contiennent éventuellement des charges organiques,
**caractérisées en ce que** le composant A contient des sels de carbamate d'ammonium (A4) et **en ce que** le composant A ou le composant B ou les deux composants contiennent des fibres de carbone (C) ayant une longueur de fibre moyenne de 60 à 200 µm.

2. Pièces moulées selon la revendication 1, **caractérisées en ce que** les fibres de carbone (C) présentent des longueurs de fibres moyennes de 90 à 200 µm.

3. Pièces moulées selon l'une quelconque des revendications 1 à 2, **caractérisées en ce que** les pièces moulées présentent une densité de 0,7 à 1, 1 g/cm³.

4. Pièces moulées selon l'une quelconque des revendications 1 à 3, **caractérisées en ce que** les pièces moulées présentent un module d'élasticité en flexion le long de la direction des fibres d'au moins 600 MPa.

5. Utilisation des pièces moulées selon l'une quelconque des revendications 1 à 4 en tant que pièces extérieures de carrosserie, éléments de carrosserie, pare-chocs flexibles d'automobiles, garde-boue, portes, capots arrière, jupes avant et arrière.
